# FASCICULE DE BREVET EUROPEEN

(11) **EP 0 966 085 B1**
(45) Date de publication et mention de la délivrance du brevet: **04.07.2007**
(21) Numéro de dépôt: 99810434.3
(22) Date de dépôt: 19.05.1999
(51) Int. Cl.: H02H 7/085, E05F 15/00

(54) **Dispositif de commande de l'arrêt d'un produit d'occultation motorisé**
Steuereinrichtung zur Ausschaltung einer motorisierten Verdunkelungseinrichtung
Control device for the cut-off of a motorised shading device

(30) Priorité: 16.06.1998 FR 9807559
(43) Date de publication de la demande: 22.12.1999
(73) Titulaire: Somfy SAS, 74300 Cluses (FR)
(72) Inventeur: Bruno, Serge, 74460 Marnaz (FR)
(74) Mandataire: Bugnion Genève

(56) Documents cités:
- WO-A-97/21262
- FR-A- 2 649 260

## Description

L'invention a pour objet un dispositif de commande de l'arrêt d'un produit d'occultation entraîné par un moteur asynchrone à condensateur de déphasage, arrêtant le moteur lorsque le produit d'occultation rencontre une butée ou un obstacle et exploitant à cet effet au moins un paramètre de fonctionnement du moteur pour détecter l'apparition d'un surcouple résistant.

Un tel dispositif est utilisé particulièrement pour commander l'arrêt du moteur d'un tube d'enroulement de store ou de volet roulant lorsque le store ou le volet roulant arrive en butée en position totalement enroulée. Il peut aussi servir à arrêter la descente d'un volet roulant ou la fermeture d'une porte lorsque ce produit d'occultation rencontre un obstacle dans son mouvement de fermeture ou commander l'arrêt du moteur lorsqu'un tel produit d'occultation arrive en butée en position complètement fermée.

On connaît plusieurs dispositifs opérant selon ce principe. Ces dispositifs se différencient par le paramètre mesuré et la manière de le mesurer et de l'exploiter. Dans le dispositif selon le brevet DE 42 11 495, on mesure la tension aux bornes des enroulements du moteur. Dans le brevet GB 2 168 497, les paramètres mesurés sont le courant principal et la tension principale. Des brevets FR 2 749 714, 2 649 260 et 2 685 829, on connaît des dispositifs mesurant la tension aux bornes de la capacité de déphasage. Le dispositif décrit dans le brevet EP 0 716 214 utilise comme paramètres le courant dans l'enroulement principal et le courant dans l'enroulement auxiliaire du moteur. Enfin, il est connu du brevet DE 43 12 987 de mesurer la tension aux bornes de l'enroulement auxiliaire du moteur.

Tous ces dispositifs font preuve de créativité et d'ingéniosité en ce qui concerne les moyens de détection, la précision de la détection et la compensation de l'influence de la température du moteur, mais ils présentent tous un inconvénient majeur dans le cas où la détection doit être à la fois sensible et fiable, notamment dans le cas de portes ou autres produits d'occultation à poids compensé où le moteur fournit peu de couple, car cette détection est perturbée et faussée par les chutes de tension sur le réseau domestique, ces chutes de tension modifiant la valeur des paramètres mesurés. Cette perturbation se traduit par des arrêts inopinés, des dérèglements et des erreurs d'apprentissage dus à la confusion d'une chute du paramètre mesuré due à l'apparition d'un surcouple résistant et d'une chute de la valeur du paramètre mesuré due à une chute de la tension du réseau domestique due, par exemple, à une surcharge passagère du réseau, due, par exemple, à la mise en marche d'un fort consommateur électrique ou à un phénomène naturel tel qu'un orage. Une telle confusion peut avoir des conséquences désastreuses sur une toile. Par exemple, si un vent impétueux se lève alors qu'une toile est déployée, un automatisme de protection contre le vent détecte et commande à la motorisation d'enrouler complètement la toile. Si ce vent impétueux s'accompagne d'un orage et que la foudre vienne à tomber sur une ligne de distribution, alors il y aura inévitablement des variations de l'alimentation du réseau domestique susceptibles de perturber le moteur. Si le dispositif de détection est sensible, qualité requise pour ne pas traumatiser le produit d'occultation en position de fin d'enroulement, alors il y aura très probablement une détection erronée de fin d'enroulement et un arrêt de la motorisation alors que la toile est encore partiellement déployée, ce qui peut avoir des conséquences désastreuses.

Dans le cas d'un store ou d'un volet roulant, dont l'arrêt en position totalement déroulée est commandé par comptage d'impulsions à partir de la position enroulée, une chute de tension du réseau domestique peut également avoir de graves conséquences lorsque le point d'arrêt en position totalement enroulée est confondu avec un arrêt en position intermédiaire du à une chute de la tension de l'alimentation. En effet, le comptage se fera à partir de la position d'arrêt intermédiaire comme s'il s'agissait de la position totalement enroulée, de telle sorte que le dispositif de commande d'arrêt du moteur voudra poursuivre le déroulement au delà de la position totalement déroulée, ce qui pourra provoquer des dégâts sur l'installation.

L'invention a pour but d'obvier à ces inconvénients.

Le dispositif selon l'invention est caractérisé en ce qu'il comprend en outre des moyens de détection d'une baisse de la tension d'alimentation du réseau domestique et des moyens d'inhibition de la commande d'arrêt lorsque la tension d'alimentation descend au dessous d'une valeur déterminée et aussi longtemps que cette tension reste au dessous de cette valeur déterminée.

La philosophie de l'invention consiste donc à anticiper une détection erronée.

Les moyens de détection peuvent être réalisés soit de manière analogique par un circuit approprié, soit de manière numérique au moyen d'une unité logique de traitement équipée d'un calculateur.

Le dessin annexé représente, à titre d'exemple, deux modes d'exécution de l'invention.

La figure 1 est un schéma-bloc illustrant le principe de l'invention et valable pour les deux modes d'exécution.

La figure 2 représente le schéma général d'un mode d'exécution analogique.

La figure 3 est un diagramme illustrant le principe de détection utilisé dans le mode d'exécution de la figure 2.

La figure 4 représente un exemple de schéma électrique utilisable pour la réalisation de ce mode d'exécution analogique.

La figure 5 représente le schéma d'un mode d'exécution numérique.

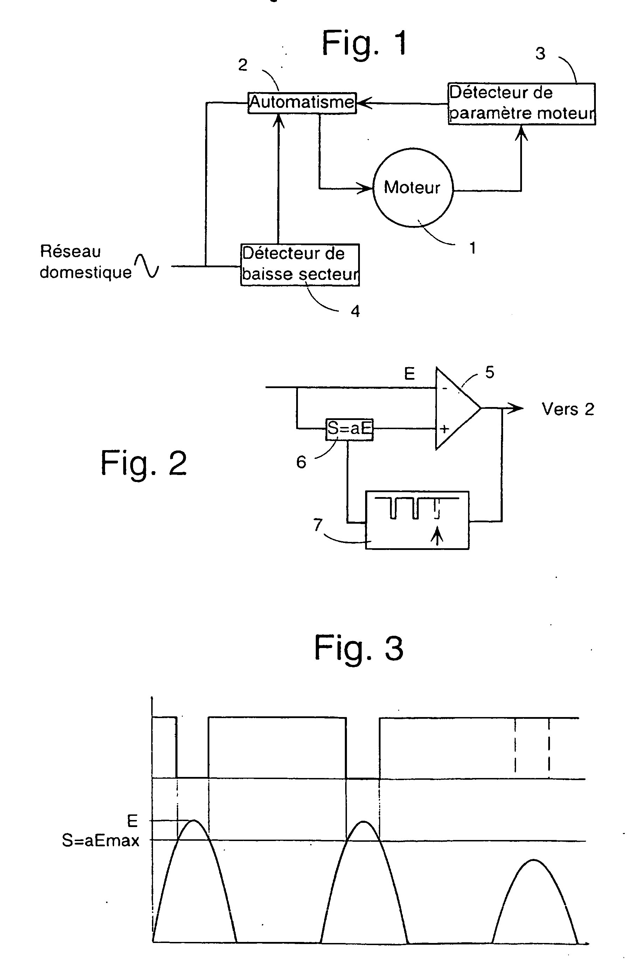

Selon le schéma de la figure 1, un moteur 1, entraînant un volet roulant ou un store, est commandé par un automatisme 2, par exemple, un automatisme commercialisé sous la référence SOMFY LINE 1000 commandant le déploiement et le réenroulement du store en fonction de l'ensoleillement et du vent, automatisme alimenté par le réseau domestique. L'automatisme 2 assure en outre l'arrêt du moteur en fonction d'un paramètre moteur détecté par un détecteur 3 de manière à arrêter le moteur lorsque le store est complètement enroulé ou s'il rencontre un obstacle. Conformément à l'invention, l'installation est complétée par un détecteur de baisse secteur 4 qui inhibe la commande d'arrêt du moteur par l'automatisme 2 lorsque la tension sur le réseau domestique descend au dessous d'une valeur choisie et aussi longtemps que cette tension reste au dessous de cette valeur choisie.

Le détecteur de baisse secteur 4 peut être réalisé de manière analogique ou numérique. Un exemple d'exécution analogique sera décrit en relation aux figures 2 à 4.

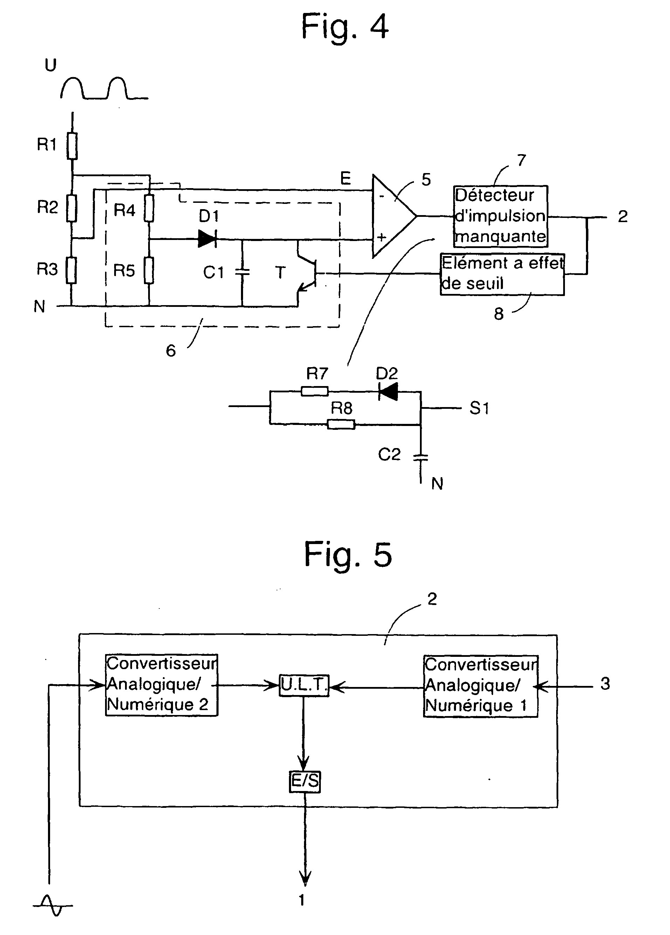

Selon le schéma général de la figure 2, le détecteur de baisse secteur comprend un comparateur 5 sur les entrées duquel sont appliquées, d'une part, une tension redressée en demi-alternances d'une tension proportionnelle à la tension sur le réseau ou secteur, tension dont la valeur de crête des demi-alternances et égale à E, et, d'autre part, une tension continue de seuil S = α E, α étant inférieur à 1. Ces tensions sont représentées sur le diagramme de la figure 3. Aussi longtemps que l'amplitude des demi-alternances E est supérieure à la tension de seuil S, le comparateur 5 délivre à sa sortie des impulsions à zéro volt, comme représentées à la figure 3. Si par contre l'amplitude des demi-alternances appliquées directement au comparateur descend en dessous du seuil S, aucune impulsion n'apparaît à la sortie du comparateur 5. Cette absence d'impulsion est détectée par un détecteur 7 qui envoie alors un signal d'inhibition à l'automatisme 2, cette inhibition durant aussi longtemps qu'aucune impulsion n'apparaît à la sortie du comparateur 5. La liaison du détecteur 7 au circuit 6 est propre à l'exemple de réalisation représenté à la figure 4.

Dans le circuit représenté à la figure 4, la tension du réseau redressée en demi-alternances U est appliquée, à travers une résistance R1 à un premier diviseur de tension R2/R3 délivrant la tension E et à un second diviseur de tension R4/R5 faisant partie du circuit d'établissement de seuil 6, la seconde tension divisée étant redressée par un circuit redresseur conventionnel constitué d'une diode D1 et d'un condensateur C1. Le détecteur d'impulsion manquant 7 comprend un condensateur C2 monté, comme le condensateur d'un circuit redresseur, d'une part, avec une diode D2 et une résistance R7 et, d'autre part, avec une résistance R8 parallèle à D2 et R7. La constante de temps de R8 et C2 est d'environ 20 millisecondes, c'est-à-dire sensiblement égale à une période de la tension du réseau, alors que la constante de temps de R7 et C2 est beaucoup plus petite que celle de R8 et C2, soit d'environ 1 milliseconde. Lorsque la tension du réseau domestique est à sa valeur normale et que des impulsions à zéro volt apparaissent régulièrement à la sortie du comparateur 5, ces impulsions ont pour effet de décharger et de maintenir déchargé le condensateur C2 à travers la résistance R8, la diode D2 étant polarisée dans le sens bloqué de telle sorte qu'aucun courant ne traverse R7. Dès qu'une impulsion est manquante, le condensateur C2 continue de se charger à travers R8. La montée de tension à la sortie S1 du circuit 7 est reçue comme signal d'inhibition par l'automatisme 2. Lorsqu'une impulsion apparaît à nouveau à la sortie du comparateur 5, le condensateur C2 se décharge rapidement et l'automatisme est aussitôt prêt à opérer à nouveau. Le circuit comprend en outre un élément à effet de seuil 8 commandant la fermeture d'un transistor T monté parallèlement au condensateur C1 du circuit 6. Cet élément à effet de seuil 8 compare la tension sur le condensateur C2 à une tension de référence. Lorsque cette tension monte au dessus de la tension de référence, l'élément à effet de seuil 8 commande la fermeture du transistor T à travers lequel peut alors se décharger partiellement le condensateur C1. La tension de seuil S tombe momentanément en dessous de la tension secteur, ce qui crée à nouveau des impulsions à zéro volt. Le transistor T se bloque à nouveau et le condensateur C1 peut se recharger à la tension déterminée par le diviseur de tension R4, R5.

Etant donné que le dispositif réagit immédiatement à une chute de tension, le fait que la tension appliquée sur le redresseur D1/C1 chute également n'est pas gênante, compte tenu de l'inertie du circuit redresseur. La tension de seuil S pourrait bien entendu être obtenue d'une autre manière.

L'exécution numérique représentée à la figure 5 se résume à l'adjonction d'un second convertisseur analogique-numérique CAN 2 à l'automatisme 2, ce convertisseur recevant la tension du réseau ou une tension proportionnelle. L'unité logique de traitement ULT est programmée de manière à inhiber la commande d'arrêt du moteur lorsque l'état de la sortie du convertisseur CAN 2 correspond à une chute de tension du réseau en dessous d'une valeur choisie. Le convertisseur analogique-numérique CAN 1 convertit le paramètre moteur utilisé pour la commande de l'arrêt du moteur par détection d'un surcouple.

Grâce à une détection de zéro volt, on peut se contenter de ne lire que la valeur maximale des sinusoïdes.

## Revendications

1. Dispositif de commande de l'arrêt (2) d'un produit d'occultation entraîné par un moteur asynchrone à condensateur de déphasage (1) arrêtant le moteur lorsque le produit d'occultation rencontre une butée ou un obstacle et exploitant à cet effet au moins un paramètre de fonctionnement du moteur pour détecter l'apparition d'un surcouple résistant, **caractérisé en ce qu'**il comprend en outre des moyens de détection (4) d'une baisse de la tension d'alimentation du réseau domestique et des moyens d'inhibition de la commande d'arrêt (2) lorsque la tension d'alimentation descend au dessous d'une valeur déterminée et aussi longtemps que cette tension reste au dessous de cette valeur déterminée.

2. Dispositif selon la revendication 1, **caractérisé en ce que** les moyens de détection d'une baisse de la tension d'alimentation comprennent un comparateur (5) auquel sont appliquées, d'une part, une tension redressée en demi-alternances proportionnelle à la tension du réseau domestique (E) et, d'autre part, une tension continue de seuil (S), ce comparateur délivrant des impulsions tant que les demi-alternances appliquées au comparateur sont supérieures à la tension de seuil, et un circuit de détection d'absence d'impulsion (7).

3. Dispositif selon la revendication 1 comprenant une unité logique de traitement (ULT) et un convertisseur analogique-numérique (CAN 1) pour la réception du paramètre de fonctionnement du moteur, **caractérisé en ce que** l'automatisme (2) est équipé d'un second convertisseur analogique-numérique (CAN 2) auquel est appliquée la tension du réseau domestique, l'unité logique de traitement étant programmée de manière à inhiber l'ordre d'arrêt du moteur lorsque l'état de la sortie du second convertisseur analogique-numérique correspond à une chute de la tension du réseau au dessous de la valeur choisie.

4. Dispositif selon la revendication 1, **caractérisé en ce que** la valeur déterminée, dite tension de seuil (S), est une fraction de la valeur de crête (E) de la tension du réseau (S=α·E, α<1).

5. Dispositif selon la revendication 4, **caractérisé en ce que** l'apparition d'un signal d'inhibition diminue momentanément la tension de seuil (S).

6. Dispositif selon la revendication 4 ou 5, **caractérisé en ce que** la valeur déterminée est obtenue, dans un circuit d'établissement de seuil (6), aux bornes d'un condensateur (C1).

7. Dispositif selon la revendication 6, **caractérisé en ce que** le circuit d'établissement de seuil comprend un transistor (T) dans une branche en parallèle au condensateur (C1) et **en ce que** la fermeture de ce transistor décharge partiellement le condensateur ce qui a pour effet d'abaisser la tension de seuil.

## Claims

1. A device for controlling the stopping (2) of a shrouding product driven by an asynchronous motor having a phase-shifting capacitor (1) stopping the motor when the shrouding product encounters an abutment or an obstacle and utilizing for this purpose at least one operating parameter of the motor so as to detect the appearance of a resisting overtorque, **characterized in that** the device furthermore comprises means (4) for detecting a dip in the supply voltage of the local network and means for disabling the control of stoppage (2) when the supply voltage falls below a specified value and for as long as this voltage remains below this specified value.

2. The device as claimed in claim 1, **characterized in that** the means for detecting a dip in the supply voltage comprises : a comparator (5) to which are applied, on the one hand, a half-wave rectified voltage proportional to the voltage of the local network (E) and, on the other hand, a threshold DC voltage (S), this comparator delivering pulses so long as the half-waves applied to the comparator are greater than the threshold voltage, and a missing pulse detection circuit (7).

3. The device as claimed in claim 1, comprising a logic processing unit (ULT) and an analog/digital converter (CAN 1) for receiving the operating parameter of the motor, **characterized in that** the automatic controller (2) is equipped with a second analog/digital converter (CAN 2) to which is applied the voltage of the local network, the logic processing unit being programmed in such a way as to disable the motor stop command when the state of the output of the second analog/digital converter corresponds to a drop in the voltage of the network below the chosen value.

4. The device as claimed in claim 1, **characterized in that** the determined value, said threshold voltage (S), is a fraction of the peak value (E) of the local network voltage (S=α×E, α<1).

5. The device as claimed in claim 4, **characterized in that** the appearance of an inhibiting signal decreases momentarily the threshold voltage (S).

6. The device as claimed in claim 4 or 5, **characterized in that** the determined value is obtained, in a circuit for establishing a threshold (6), between the terminals of a capacitor (C1).

7. The device as claimed in claim 6, **characterized in that** the circuit for establishing a threshold comprises a transistor (T) in a branch in parallel with the capacitor C1 and **in that** the closing of this transistor discharges partially the capacitor which decreases the voltage threshold.

## Patentansprüche

1. Vorrichtung zum Steuern der Abschaltung einer Verdunkelungseinrichtung, die von einem Asynchronmotor mit Phasenverschiebungs-Kondensator (1) angetrieben wird, wobei diese Vorrichtung den Motor abschaltet, wenn die Verdunkelungseinrichtung auf einen Anschlag oder ein Hindernis trifft, und zu diesem Zweck wenigstens einen Betriebsparameter des Motors ausnutzt, um das Auftreten eines übergrossen Widerstandsmoments zu erfassen, **dadurch gekennzeichnet, dass** sie ausserdem Mittel (4) zum Erfassen einer Absenkung der Speisespannung des Ortsnetzes sowie Mittel aufweist, welche den Steuerbefehl zum Abschalten (2) verhindern, wenn die Speisespannung unter einen bestimmten Wert absinkt, und das solange, wie diese Spannung unter diesem bestimmten Wert bleibt.

2. Vorrichtung nach Anspruch 1, **dadurch gekennzeichnet, dass** die Mittel zum Erfassen einer Absenkung der Speisespannung einen Komparator (5), an den einerseits eine der Spannung des Ortsnetzes (E) proportionale gleichgerichtete Halbwellenspannung und andererseits eine Schwellen-Gleichspannung (S) gelegt wird und welcher solange Impulse liefert, wie die an den Komparator angelegten Halbwellen grösser als die Schwellenspannung sind, und ferner eine Schaltung (5) aufweisen, welche die Abwesenheit der Impulse (7) erfasst.

3. Vorrichtung nach Anspruch 1, **dadurch gekennzeichnet, dass** die Steuerungsautomatik (2) einen zweiten AnalogDigital-Wandler (CAN 2) aufweist, an den die Spannung des Ortsnetzes gelegt wird, wobei die logische Verarbeitungseinheit so programmiert ist, dass der Steuerbefehl zum Abschalten des Motors verhindert wird, wenn der Zustand des Ausgangs des zweiten Analog-DigitalWandlers einem Abfall der Netzspannung unter den gewählten Wert entspricht.

4. Vorrichtung nach Anspruch 1, **dadurch gekennzeichnet dass** der bestimmte Wert der erwähnten Schwellenspannung (S) einen Bruchteil des Maximalwerts (E) der Netzspannung beträgt (S = α · E, α < 1).

5. Vorrichtung nach Anspruch 4, **dadurch gekennzeichnet, dass** das Auftreten eines Verhinderungssignals augenblicklich die Schwellenspannung (S) verringert.

6. Vorrichtung nach Anspruch 4 oder 5, **dadurch gekennzeichnet, dass** der bestimmte Wert in einer die Schwelle einstellenden Schaltung (6) an den Klemmen eines Kondensators (C1) erhalten wird.

7. Vorrichtung nach Anspruch 6, **dadurch gekennzeichnet, dass** die die Schwelle einstellende Schaltung einen parallel zum Kondensator (C1) geschalteten Transistor (T) aufweist und dass die Schliessung dieses Transistors den Kondensator teilweise entlädt, was eine Absenkung der Schwellenspannung bewirkt.
